# EUROPÄISCHE PATENTSCHRIFT

(11) **EP 3 512 683 B1**
(45) Veröffentlichungstag und Bekanntmachung des Hinweises auf die Patenterteilung: **14.12.2022**
(21) Anmeldenummer: 17768097.2
(22) Anmeldetag: 13.09.2017
(51) Int. Cl.: B29B 7/00, C08J 3/00, B29K 511/00, B29K 511/10, B29B 9/14, B29B 7/84, B29B 7/46, B29B 7/86, B29B 7/92, B29B 7/90, B29C 48/00, B29C 48/04, B29C 48/285, B29C 48/92, C08J 3/20, C08J 3/12, F26B 5/14, F26B 5/08

(54) **VERFAHREN ZUR HERSTELLUNG EINES BIOKUNSTSTOFFGRANULATS AUF BASIS VON SONNENBLUMENKERNSCHALEN/ SONNENBLUMENKERNHÜLSENMATERIAL**
METHOD FOR PRODUCING A BIOPLASTIC GRANULATE BASED ON SUNFLOWER SEED SHELLS/SUNFLOWER SEED HULL MATERIAL
PROCÉDÉ POUR LA PRODUCTION D'UN GRANULAT EN MATIÈRE BIOLOGIQUE À BASE DE COQUES DE GRAINES DE TOURNESOL/MATÉRIAU D'ENVELOPPE DE GRAINES DE TOURNESOL

(30) Priorität: 13.09.2016 DE 102016117168
(43) Veröffentlichungstag der Anmeldung: 24.07.2019
(73) Patentinhaber: SPC Sunflower Plastic Compound GmbH, 49681 Garrel (DE)
(72) Erfinder: MEYER, Sebastian, 58675 Hemer (DE); HUMMERT, Fabian, 48624 Schöppingen (DE); TRUMME, Reinhard, 49413 Dinklage (DE); ALBERS, Stephan, 49413 Dinklage (DE)
(74) Vertreter: Eisenführ Speiser
(86) Internationale Anmeldenummer: PCT/EP2017/073029
(87) Internationale Veröffentlichungsnummer: WO 2018/050698

(56) Entgegenhaltungen:
- WO-A1-2013/072146
- WO-A1-2014/184273
- US-A1- 2007 170 611

## Beschreibung

Die Erfindung betrifft ein Verfahren zur Herstellung eines Biokunststoffgranulats auf Basis von Sonnenblumenkernschalen/Sonnenblumenkernhülsenmaterial.

Als Stand der Technik wird auf WO 2014/184273 A1 und auf WO 2013/072146 A1 sowie auf die Dokumente DE 10 2012 104 375 A1, EP 2 565 004 A1 und DE 699 10 612T hingewiesen.

Es hat sich gezeigt, dass der Einsatz des Biowerkstoffgranulats bei der Weiterverarbeitung, insbesondere beim Spritzgießen, Extrudieren etc. mit dem aus dem Stand der Technik bekannten Technologien nicht zur besten Zufriedenheit möglich ist. Einerseits unterliegen mit aus dem Stand der Technik bekannten Granulat die Spritzgießwerkzeuge einer hohen Oxidierung (Rosten) der Werkzeuge selbst und andererseits können die in den Spritzgießwerkzeugen hergestellten Kunststoffprodukte zum Teil fehlerhaft sein oder unter Umständen, eine zu hohe Varianz bei der Maßhaltigkeit aufweisen.

Die Aufgabe wird erfindungsgemäß mit einem Verfahren nach Anspruch 1 gelöst, Vorteilhafte Weiterbildungen sind in den Unteransprüchen sowie in der gesamten Offenbarung der vorliegenden Anmeldung beschrieben.

Die Erfindung macht sich dabei zum Ziel, das herzustellende Biokunststoffgranulat mit einer außerordentlich geringen Restfeuchte zur Verfügung zu stellen, wobei die Restfeuchte deutlich unter einem 1% (Gewichtsprozent) liegt, vorzugsweise sogar unter 0,5% und besonders vorzugsweise unter 0,1%. Ein Wert von beispielsweise 0,02 bis 0,06%, zum Beispiel 0,05% sich als optimal herausgestellt.

Wenn man bedenkt, dass das ausgangsseitig eingesetzte Sonnenblumenschalenmaterial eine Feuchte aufweist, die je nach Sonnenblumensorte Erntebedingungen Lagerbedingungen etc. im Bereich von 8 bis 10% liegt, wäre es zwar denkbar, bereits das eingesetzte Sonnenblumenschalenmaterial auf eine außerordentlich geringe Restfeuchte herunterzutrocknen, allerdings wäre der dafür eingesetzte Aufwand mittels Trocknern und der Energie für die Trocknung außerordentlich groß und daher nicht wirtschaftlich.

Die Erfindung schlägt daher vor, den Restfeuchtegehalt des Granulats im Wesentlichen in drei Schritten während der Verarbeitung des Schalenmaterials bzw. der Compoundierung auf den gewünschten Zielwert einzustellen, wobei eine erste bedeutende Trocknung bereits beim Mahlen des Sonnenblumenschalenmaterials erfolgt. Eine zweite Heruntertrocknung erfolgt dann während des Compoundierens und eine dritte Trocknungsphase erfolgt dann nach dem Compoundieren, indem das noch sehr heiße Sonnenblumenschalen-Kunststoff-Komposit für eine vorbestimmte Zeit einer natürlichen Luftatmosphäre oder einer künstlichen Atmosphäre ausgesetzt wird, die die Heruntertrocknung des Materials begünstigt.

Während des Mahlvorganges, also während der Zerkleinerung der Sonnenblumenschalenfasern auf ihre gewünschte Korngröße, wird das Sonnenblumenschalenmaterial einer großen Reibung ausgesetzt mit der Folge, dass das Schalenmaterial sich auch entsprechend erwärmt, zum Beispiel auf Temperaturen im Bereich von 30 bis 100 °C, aber auch Temperaturen über 100 °C sind möglich, insbesondere dann wenn noch zusätzlich in dem Mahlprozess thermische Energie von außen zugeführt wird..

Dadurch erfolgt bereits ein erster bedeutender Trocknungsschritt, zumal die durch den Mahlvorgang angefeuchtete Luft ständig abgesaugt wird und somit ein bedeutender Beitrag der Feuchte im Sonnenblumenschalenmaterial abgeführt wird. In diesem Trocknungsabschnitt erfolgt also eine Trocknung ohne Zuführung von Wärmeenergie von außen. Das ist zwar möglich, kann auch unter Umständen erfindungsgemäß vorgesehen werden) aber solche Zuführung von Wärmeenergie von außen zieht auch zusätzliche Kosten für den Mahlvorgang nach sich.

Es ist durchaus möglich während der Mahltrocknung das Sonnenblumenschalenmaterial von einem angenommenen Ausgangswert von 10% Feuchte bereits auf 6 bis 4% zu verringern, was bedeutet, dass die Restfeuchte im Schalenmaterial nach der Mahltrocknung im Bereich von 4 bis 6% zum Beispiel 5% liegt.

Während des Compoundierens des Sonnenblumenschalenmaterials mit dem gewünschten Kunststoffmaterials - das Compoundieren findet bevorzugt in einem Compoundierextruder, zum Beispiel einem Doppelschneckenextruder, statt, wird das Sonnenblumenschalenmaterial in dem gewünschten Verhältnis, zum Beispiel 50:50, 40:60, 35:65, 65:35 etc., je nach dem was erwünscht ist, mit dem Kunststoffmaterial zusammengeführt und homogenisiert bzw. vermischt - wird die Feuchte weiter verringert. Das Compoundieren muss bei einer Temperatur von >100 °C stattfinden.

Teil des Compoundieren ist das Granulieren des Materials, das bedeutet, dass das compoundierte Material am Ende der Compoundierung in Form von Kugeln oder einer Linsenform vorliegt, in dem ein Heißabschlag erfolgt oder das compoundierte Material als Zylinder vorliegt im Falle eines Kaltabschlags.

Beim Heißabschlag wird der Extrusionsstrang (aus Sonnenblumenschalenmehl und Kunststoff-Granulat) direkt nach der Düse durch ein mit Wasser überströmtes rotierendes Messer "abgehackt" (abgeschlagen). Dabei befindet sich das rotierende Messer unter Wasser. Das Wasser verhindert dabei das Zusammenkleben der einzelnen Granulatkörper, also der Kugeln, Linsen, oder Zylinder etc., und kühlt dabei auch das Material auf eine gewünschte Temperatur ab. Meistens wird zur Kühlung Wasser verwendet, es ist alternativ aber auch möglich, Luft zu verwenden oder ein anderes Gas oder eine andere Flüssigkeit (die Auswahl des richtigen Kühlmittels ist unter anderem auch werkstoffabhängig bzw. hängt von der jeweiligen Verfügbarkeit ab, jedoch von der Verträglichkeit des Kühlmittels mit dem Material des Extrusionsstrangs).

Gemäß der Erfindung ist bevorzugt, dass das Wasser (also das Kühlmittel) beim Abschlag eine Temperatur von mehr als 50 °C aufweist, besonders geeignet ist eine Temperatur von ca. 80 - 90 °C (± 5°C).

Da das Komposit während des Compoundierens im Extruder eine Temperatur von ca. 180 bis 220 °C aufweist, somit quasi flüssig ist, erfolgt trotz relativ hoher Wassertemperatur bereits während des Abschlagens unter Wasser eine erste Abkühlung, wobei das Granulatmaterial (Compound) selbst noch nicht auf eine Temperatur von unter 100 °C abkühlt, sondern auf eine Temperatur deutlich darüber, beispielsweise ca. 130 bis 150 °C gehalten wird.

Dies hat zur Folge, dass auch nach der Compoundierung weiter Restfeuchte, die sich noch in dem Schalenmaterial und somit im Coumpondmaterial befindet, aus dem Biokunststoff entweichen kann.

Dies ist möglich, weil unter Umständen die Poren der compoundierten Biokunststoffgranulate noch nicht vollständig verschlossen sind oder weil einzelne Fasern nach außen aus dem Granulat herausstehen und aufgrund der Kapillarwirkung den Fasern Restfeuchte entweichen kann ebenso wie es erfolgen kann, weil unter der Oberfläche der Granulatkörper noch befindliche Restfeuchte durch das Material dringen kann, was die Entfernung von Restfeuchte aus den Granulatkörpern fördert.

Zur Unterstützung der Abtrocknung erfolgt vor dem Wasserabschlag im Extruder eine Entgasung, die entweder in einem einzigen Schritt oder auch in zwei oder mehr Schritten erfolgen kann.

Ein Versuch hat gezeigt, dass eine zunächst durchgeführte atmosphärische Entgasung und dann in einem zweiten Schritt auch eine Vakuumentgasung nochmals deutlich auch die Restfeuchte im Schalenmaterial heruntersetzt, so dass das compoundierte Granulat am Extruder ausgangsseitig (beim Wasserabschlag) eine Restfeuchte von ca. 0,1 bis 0,5, vorzugsweise ca. 0,08 bis 0,2% aufweist.

Nach dem Wasserabschlag sind die Granulatkörper außenseitig mit Wasser benetzt. Die Entfernung dieses Oberflächenwassers erfolgt in einem Trockner, vorzugsweise in einem Zentrifugaltrockner, in dem Granulatkörper mit relativ höher Geschwindigkeit einer Zentrifuge zugeführt werden und in dem dann durch ein Sieb die Granulatkörper vor dem Sieb verbleiben, während das Wasser an den Granulatkörpern durch das Sieb nach außen dringt und abgeführt wird.

Das abgeführte Wasser wird unter Umständen -falls notwendig- gereinigt, um darin befindliche Bestandteile des Biokunststoffgranulates aus dem Wasser zu entfernen. Das so aufbereitete Wasser kann in dem Extruder für den Wasserabschlag neu verwendet werden, sodass insgesamt auch der Wasserverbrauch für die Herstellung der erfindungsgemäßen Biokunststoffgranulate minimiert werden kann.

Schließlich wird das compoundierte Material nach Verlassen des Trockners, also zum Beispiel des Zentrifugaltrockners, einer weiteren Trockeneinrichtung zugeführt, nämlich einem Wendelhubförderer, welcher dafür sorgt, dass die Verweilzeit des compoundierten Granulats an der Atmosphäre auf eine gewünschte Zeit eingestellt wird, bevor das compoundierte Granulat dann verpackt werden kann.

Dabei ist das System so eingestellt, dass das compoundierte Granulat mit einer Temperatur von über 100 °C, vorzugsweise ca. 130 °C, in die Wendelhubförderstrecke einfährt und beim Verlassen die Materialtemperatur noch bei ca. 50 bis 70 °C liegt, wobei der letzte Kühlschritt im Wendelhubförderer auch dadurch erfolgen kann, in dem in den Boden des Wendelhubförderers bestimmte und gezielt Kühlmittel, zum Beispiel Wasser, eingeführt wird.

Am Ende der Wendelhubförderstrecke kann schließlich die Restfeuchte mit dem gewünschten Zielwert von ca. 0,05% (oder weniger) erreicht werden.

Mit dem erfindungsgemäßen Verfahren kann zu wirtschaftlich vernünftigen Bedingungen, insbesondere im schonenden Umgang mit den energetischen Ressourcen eine Restfeuchte von 0,05% oder gar weniger im fertig abgepackten compoundierten Granulat erreicht werden.

Dies hat den Vorteil, dass dieses Material bei der Verarbeitung in Spritzgießmaschinen, Extrudern oder Rotationsgußpresstechnik, Thermoformverfahren, Tiefziehverfahren etc. die Verarbeitungswerkzeuge (z.B. Spritzgussformen) schont, insbesondere keine unerwünschte Oxidation an den Verarbeitungswerkzeugen, zum Beispiel Spritzgussformen etc. auftritt und schließlich wird auch die Qualität des unmittelbaren hergestellten Produkts aus dem compoundierten Granulat deutlich gleichmäßiger und damit von der Qualität her besser.

Es hat sich auch herausgestellt, dass bei der Entgasung, insbesondere bei der atmosphärischen und/oder Vakuumentgasung, auch noch unter Umständen am Schalenmaterial anhaftende Restölbestandteile sich zum Teil ebenfalls aus dem compoundierten Granulat herauslösen lassen.

Auch kann durch die Vakuumentgasung dafür gesorgt werden, dass andere flüchtige Bestandteile (z. B. VOC - Volatile organic content), die sich insbesondere noch im Sonnenblumenschalenmaterial befinden, herausgelöst und abgeführt werden, was zu einer weiteren Qualitätsverbesserung den Biokunststoffgranulats führt.

Der Erfindung liegt insbesondere die Erkenntnis zu Grunde, dass im Compoundierungsprozess durch Abschlag mit ca. 80 - 90 °C Warmwasser nicht, wie es bisher geschehen ist, das Sonnenblumenschalen-Kunststoffgranulat auf Temperaturen deutlich unter 100 °C heruntergekühlt wird, sondern bewusst auf einem Temperaturniveau von über 100 °C, vorzugsweise ca. 130 °C, gehalten wird.

Das hat den Vorteil, dass die Feuchtigkeit aus dem Schalenmaterial weiter entweichen kann, da bei einer solchen Temperatur bekanntlich Wasser oberhalb des Siedepunktes ist und sich sehr schnell verflüchtigt und da bei solchen Temperaturen das Kunststoffmaterial noch nicht völlig erstarrt ist, ist es möglich, dass in diesem gemahlenen Schalenmaterial und somit im Biokunststoffgranulatkörper vorhandene Restfeuchtigkeit noch weiter aus dem Granulatkörper entweichen kann, so dass der gewünschte Entfeuchtungsgrad erreichbar ist.

Soll der Restfeuchtegehalt im compoundierten Granulatmaterial noch weiter als 0,05% herabgesetzt werden, ist es möglich einerseits entweder die Eingangstemperatur des Granulats im Wendelhubförderer höher einzustellen und/oder die Verweildauer im Wendelhubförderer zu verlängern und/oder zusätzliche Wärme in die der Förderstrecke des Wendelhubförderers zuzuführen, sodass das Material noch länger als bisher eine Temperatur von über 100 °C aufweist. Auch wäre es möglich, im Extruder eine noch wirksamere Trocknung durchzuführen, zum Beispiel durch eine Verlängerung der Extruderstrecke.

Sobald das compoundierte Kunststoffgranulat eine Temperatur von 50°C oder weniger aufweist, kann kaum mehr Restfeuchte das Material verlassen.

Das erfindungsgemäße Verfahren sorgt letztlich für die Heruntertrocknung auf die gewünschte Restfeuchte in im Wesentlichen drei Schritten und der Trocknungsschritt während der Compoundierungsphase sorgt nicht nur für eine weitere Heruntertrocknung, sondern ist wie bereits erwähnt auch dazu geeignet, noch Ölbestandteile (oder flüchtige Bestandteile), die dem Schalenmaterial anhaften oder im Schallenmaterial eingebunden sind, zu entfernen.

Die Erfindung ist nachfolgend anhand in den Figuren dargestellter Ausführungsbeispiele erläutert.
Figur 1 zeigt einen ersten Überblick über den ersten Teil eines Ablaufs bzw. einer Struktur zum Herstellen eines erfindungsgemäßen Biokunststoffgranulats.
Figur 2 zeigt den zweiten Teil bis zur Absackung des hergestellten Biokunststoffgranulats.

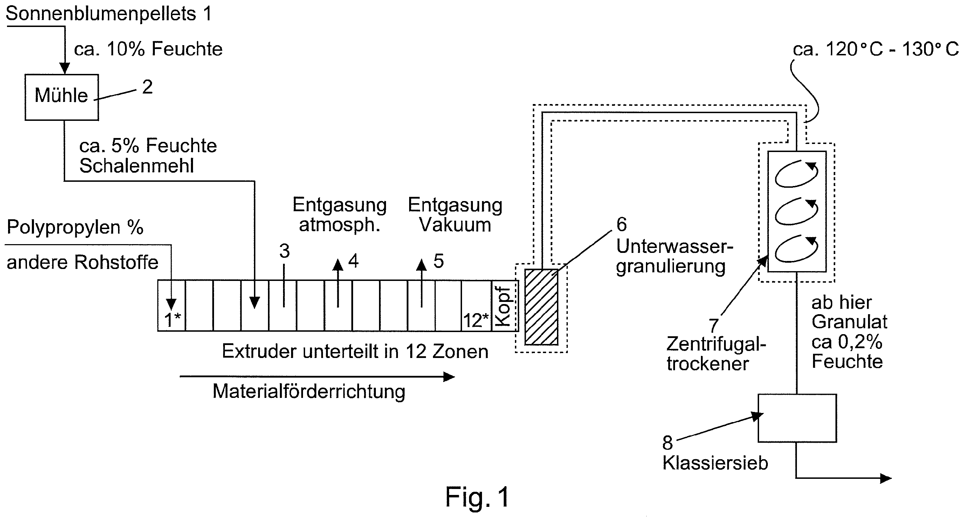

In Figur 1 ist zu erkennen, dass zunächst Sonnenblumenpellets 1 dem System zugeführt werden. Sonnenblumenpellets sind dabei die Schalen von geschälten Sonnenblumenkernen und diese Schalen werden zu Pellets verpresst/gedrückt.

Der in den Sonnenblumenschalen enthaltene Feuchtigkeitsanteil liegt dabei noch bei ca. 10 %, kann aber wie bereits ausgeführt, je nach Sorte, Erntebedingungen, Reifegrad, Lagerbedingungen schwanken und zwar ± 2 bis 3 %. Die Sonnenblumenpellets werden dann einer Mühle 2 zugeführt, in welcher das Sonnenblumenschalenmaterial auf einer gewünschten Korngröße vermahlen wird.

Während des Mahlvorgangs erwärmt sich das Schalenmaterial (u.a. aufgrund der Reibungswärme) und dabei entweicht/verdunstet bereits ein Großteil der in dem Schalen enthaltenen Feuchtigkeit, sodass das die Mühle verlassende Schalenmehl noch eine Feuchtigkeit von ca. 5 % (± 1 %) aufweist.

Das Schalenmehl wird danach einem Extruder 3 zugeführt, welcher in eine Vielzahl von Zonen, im Beispiel nach Figur 1 in zwölf Zonen unterteilt ist.

In der ersten Zone wird dabei dem Extruder ein konventionelles Kunststoffmaterial-Granulat (oder Agglomerat), zum Beispiel Polypropylen (PP) mit einer vorbestimmen Korngröße und vorbestimmten (bekannten) Eigenschaft zugeführt.

In dem Extruder 3, der beispielsweise als Doppelschneckenextruder ausgerichtet ist, findet die eigentliche Compoundierung statt, wobei dort das Verhältnis von Sonnenblumenschalen einerseits und Kunststoffmaterial andererseits auf ein gewünschtes Verhältnis zum Beispiel 50 % zu 50 % oder 35 % Schalenmaterial und 65 % Kunststoff (Variationen von 20%-70% Schalenmaterial und 80-30% Kunststoffmaterial sind möglich) eingestellt wird und somit das Compound in einem gewünschten Verhältnis homogenisiert und vermischt wird.

Während des Compoundierens liegt die Temperatur des Compounds (also des aus Sonnenblumenschalenmehl und Kunststoff gebildeten Komposits) bei ca. 180 bis 220 °C (± 10 °C). In dieser Phase ist das Compound flüssig. Bei diesen Temperaturen entweicht weiterhin Feuchtigkeit aus dem Schalenmaterial bzw. Compound und die Entfeuchtung bzw. Trocknung des Materials wird im Extruder dadurch unterstützt, indem beispielsweise in einer Zone des Extruders eine atmosphärische Entgasung 4, in einer weiteren Zone - falls notwendig- auch eine Vakuumentgasung durchgeführt 5 wird.

Durch diese Schritte wird nicht nur das Schalenmaterial weiter entfeuchtet, sondern Öl-bzw. Fettbestandteile des Öls, die sich unter Umständen noch im Schalenmaterial befinden, werden zu einem beträchtlichen Teil aus dem Schalenmaterial herausgeholt und aus dem Extruder mittels einer Gebläse- oder Absaugeinrichtung mit Abluft abgefördert.

Am Ende des Extruders gelangt das Compoundiermaterial in eine Unterwassergranulierung 6. Das Wasser der Unterwassergranulierung hat dabei eine Temperatur von bevorzugt mehr als 50 °C, besonders geeignet ist eine Temperatur im Bereich von ca. 80 - 90 °C (± 5 °C). Beim Heißabschlag in der Unterwassergranulierung wird der Extrusionsstrang des Compounds durch ein rotierendes Messer abgehackt (abgeschlagen), wobei dies unter Wasser erfolgt. Wie bereits erwähnt verhindert dabei das Wasser das Zusammenkleben der einzelnen durch das Abhacken gebildeten Granulatkörper des Compoundmaterials, sodass das Compoundmaterial letztlich in Form von Tropfen, Kugeln, Linsen, Zylindern, etc. vorliegt. Gleichzeitig wird das Compoundmaterial in der Unterwassergranulierung abgekühlt, aber es weist immer noch eine Temperatur am Ende der Unterwassergranulierueng von ca. 130 °C auf (± 10 °C auf).

Schließlich wird das abgeschlagene Compoundiermaterieal einem Trockner, gemäß Figur 1 einem Zentrifugaltrockner 7 zugeführt und das aus dem Trockner 7 herausgelassene Material ist dann ein Granulat, welches noch eine Restfeuchte von ca. 0,2 % (± 0,05 %) aufweist. Im Anschluss daran durchläuft das Material ein Klassiersieb 8, in dem Granulate, die zu groß sind oder zu klein sind aus dem Materialstrom entfernt werden. Diese so abgeschiedenen Materialkörper werden später in den Compoundierprozess wieder zurückgeführt, können also wieder verwendet werden.

In dem Trockner, wie in Figur 1 gezeigt, dem Zentrifugaltrockner 7 wird das durch die Wasserabschlagung an den Granulatkörpern anhaftende Wasser entfernt, indem das Granulatmaterial in eine Zentrifuge eingegeben wird, bei der mittels eines Siebes Granulatkörper von den nach außen dringenden Wasser getrennt werden. Falls das abgeführte Wasser mit Kleinstbestandteilen des Biokunststoff-Compound-GranulatMaterials behaftet ist, kann dieses bei Bedarf auch gereinigt werden, sodass das Wasser insgesamt in den Kreislauf für den neuerlichen Wasserabschlag zurückgeführt werden kann.

Betont sei an dieser Stelle aber, dass der Zentrifugaltrockner 7 im Wesentlichen den Zweck hat, das Biokunststoff-Granulat von seinem " Oberflächenwasser also dem Wasser, welches durch den Wasserabschlag an den Granulatkörper außen benetzt, getrennt wird.

Am Ausgang des Zentrifugaltrockners weist das das Biokunststoffgranulat eine (innere) Restfeuchte von ca. 0,2 % (± 0,1 %) auf und ist im Wesentlichen vollständig von dem durch den Wasserabschlag zugeführten Wasser befreit.

Im Anschluss an den Zentrifugaltrockner 7 durchläuft wie bereits beschrieben das Biokunststoffgranulat ein Klassiersieb (8), indem die Granulate, die zu groß sind oder zu klein sind aus dem Materialstrom entfernt werden. Diese so abgeschiedenen Granulate (Materialkörper) werden später dem Compoundierungsprozess wieder zugeführt, können also wieder verwendet werden. Bei der Rückführung bildet dann das zugeführte Material mit dem neugebildeten Material neue Granulate und somit Abmaße, die hiermit gewünschten Abmaße für die Granulate entsprechen.

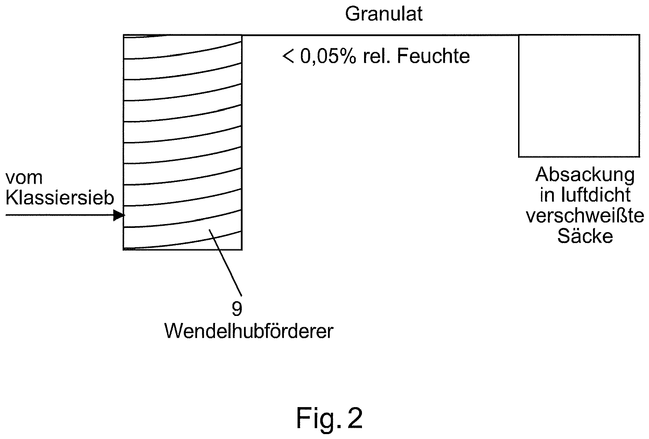

Schließlich erfolgt nach der Klassiersiebstufe eine Überführung des Granulatmaterials in einem Wendelhubförderer -Figur 2-, indem das immer noch über 100 °C warme Granulatmaterial der Atmosphäre ausgesetzt ist und dort erfolgt dann einerseits eine Abkühlung des Materials und andererseits eine weitere Trocknung des Granulats, sodass sich letztlich am Ende der Wendelhubförderstrecke noch eine Restfeuchte von 0,05 % relative Feuchte im Granulat befindet.

Am Ende der Wendelhubförderstrecke liegt die Materialtemperatur bei noch ca. 50 bis 70 °C und das so hergestellte erfindungsgemäße Biokunststoffgranulat kann dann in luftdicht verschweißte Säcke verpackt werden. Das Verpackungsmaterial also zum Beispiel die luftdichtverschweißten Säcke für den erfindungsgemäßen Biokunststoff ist dabei so ausgelegt, dass es eine Barriere gegen Luftfeuchte von außen darstellt, sodass auch nach einer Lagerung des erfindungsgemäßen Biokunststoffs in den Säcken Luftfeuchte von außen nicht in die Granulate eindiffundieren kann.

Es sei betont, dass die Förderstrecke zwischen der Unterwassergranulierung und dem Zentrifugaltrockner möglichst kurz ist, sodass das Material nur für wenige Sekunden, zum Beispiel 5 bis 15 Sekunden verweilt, was den Vorteil hat, dass das Material aus dem Unterwassergranulierer heraus möglichst schnell dem Zentrifugaltrockner zugeführt wird.

Das ist besonders dann wichtig, wenn noch relevante Feuchtigkeitsbestandteile im Granulat und somit auch im Schalenmaterial enthalten sind, denn dann, wenn die Temperatur dort 120 °C beträgt, muss auch erfindungsgemäß die Möglichkeit geschaffen werden, innerhalb von kurzer Zeit die Resttrocknung herbeizuführen und das außen an den Granulaten anhaftende Wasser soll nicht in das Granulat eindringen und die Granulate nicht zu stark abkühlen.

Wie bereits beschrieben, wird in der Extruderstrecke wenigstens eine Entgasungsstufe, sei es atmosphärisch, oder eine Vakuumentgasung vorgenommen. Wie bereits beschrieben, werden dabei noch im Schalenmaterial unter Umständen befindliche Öl- bzw. Fettbestandteile aus dem Schalenmaterial und somit aus dem sich bildenden Compound entfernt. Diese Entfernung ist außerordentlich vorteilhaft für die gesamte Qualität des am Ende hergestellten Biokunststoffgranulats und in einem ersten Versuch konnte bereits erreicht werden, dass substanzielle noch im Schalenmaterial befindliche Ölbestandteile im Extruder durch die Entgasung aus dem Schalenmaterial und somit aus Compound entfernt werden konnten. Substanziell bedeutet wenigstens 5 bis 10 %, bei einer Verlängerung der Zeit im Extruder und insbesondere bei einer Vakuumentgasung konnte auch der Anteil des entfernten Öls im Schalenmaterial auf 30 bis 50 % angehoben werden, sodass im Ergebnis das erfindungsgemäß hergestellte Biokunststoffgranulat nicht nur einen außerordentlich geringen Feuchtigkeitsgrad aufweist, wie erwähnt ca. 0,05 %, sondern auch einen geringeren Öl-/Fettgehalt aufgrund der Abführung von Öl/Fett im Extruder.

Es sei betont, dass der im Sonnenblumenschalenmaterial befindliche Öl- bzw. Fettanteil von vielen Umständen abhängt, zum Beispiel auch von der Sortenwahl des Sonnenblumenschalenmaterials, Erntereifungsgrad etc. Durch das erfindungsgemäße Verfahren wird gewährleistet, dass trotz unterschiedlicher ausgangsseitiger Öl- bzw. Fettbestandteile im Schalenmaterial letztlich eine gewünschte Qualität des erfindungsgemäßen Biokunststoffmaterials auch hinsichtlich seines Öl- bzw. Fettgehalts erreicht wird, ohne das dazu extra noch teure Zusatzmaßnahmen getroffen werden müssen.

Durch das erfindungsgemäße Verfahren wird ein Biokunststoff Granulat zur Verfügung gestellt, welches sich hervorragend in einem Spritzgießwerkzeug zuführen lässt, um damit ein Kunststoffprodukt mit gewünschten Abmaßen herzustellen. Aufgrund des außerordentlichen geringen Restfeuchtegehaltes werden dabei die Spritzgießwerkzeuge geschont und vor allem kaum eine relevante Oxidierung ausgesetzt.

Schließlich weist auch das hergestellte Kunststoffprodukt eine vorzügliche einheitliche Qualität auf, die deutlich besser ist als Kunststoffprodukte, die bislang aus einem Biokunststoff Granulat hergestellt wurden. Insbesondere können mit erfindungsgemäßem Biokunststoff Granulat Kunststoffprodukte hergestellt werden, die eine vorzügliche Qualität hinsichtlich typischer Kunststoffparameter aufweisen, insbesondere hinsichtlich des E-Moduls, Kerbschlagzähigkeit, Oberflächenglätte etc.

## Patentansprüche

1. Verfahren zum Herstellen eines Biokunststoffgranulats auf Basis von Sonnenblumenkernschalen bzw. Sonnenblumenkernhülsen umfassend folgende Schritte:
- Bereitstellen von gemahlenem Sonnenblumenkernschalen/Sonnenblumenkernhülsenmaterial, wobei die Korngröße im Bereich von 3 mm oder weniger, vorzugsweise im Bereich von 0,01 bis 1 mm, bevorzugt im Bereich 0,1 bis 0,3 mm liegt;
- Bereitstellen eines Kunststoffmaterials;
- Compoundieren des Sonnenblumenkernschalen/Sonnenblumenkernhülsenmaterials mit dem Kunststoffmaterial, wobei die Compoundierung bevorzugt in einem Extruder (3), vorzugsweise einem Doppelschneckenextruder, erfolgt und das compoundierte Material am Ende der Extruderstrecke mit einem Werkzeug unter Zusatz von Wasser abgeschlagen wird, wobei das Wasser eine Temperatur von bevorzugt mehr als 50 °C, vorzugsweise ca. 80 - 90°C aufweist, um das Compound-Material abzukühlen,
- wobei während der Compoundierung das compoundierende Material einer atmosphärischen Entgasung (4) und/oder einer Vakuumentgasung (5) unterzogen wird, wobei das Verfahren **dadurch gekennzeichnet ist, dass**
- das compoundierte Material einer Abkühl- und Trockeneinrichtung, nämlich einem Wendelhubförderer (9) zugeführt wird, in der die Verweilzeit des Compound-Granulats an der Atmosphäre für einen vorbestimmten Zeitraum eingestellt wird und das Compound-Granulat dem Wendelhubförderer mit einer Temperatur von mehr als 100 °C, vorzugsweise ca. 130 °C zugeführt wird und das Kunststoffgranulat den Wendelhubförderer mit einer Temperatur unter 100 °C, vorzugsweise ca. 50 - 70 °C, den Wendelhubförderer verlässt und
- das Schalenmaterial (1) vor der Compoundierung, nämlich während eines Mahlens in einer Mühle einen ersten Beitrag heruntergetrocknet wird, wobei eine zweite Trocknung während der Compoundierung vor allem während der atmosphärischen und/oder Vakuumentgasung im Extruder durchgeführt wird, und eine dritte Trocknung erfolgt im Wendelhubförderer (9), also der Abkühl- und Trockeneinrichtung, so dass das hergestellte Biokunststoff Granulat eine Restfeuchte von deutlich weniger als 1%, vorzugsweise weniger als 0,1%, vorzugsweise von ca. 0,05% aufweist.

2. Verfahren nach Anspruch 1, **dadurch gekennzeichnet, dass** die Verweilzeit des Granulats im Wendelhubförderer bei ca. 4 bis 8 Minuten, bevorzugt 5 bis 7 Minuten liegt.

3. Verfahren nach einem der vorherigen Ansprüche, **dadurch gekennzeichnet, dass** das compoundierte Material nach Verlassen des Extruders (3) und des Wasserabschlags einer Trockeneinrichtung (6), z.B. einem Zentrifugaltrockner (7) zugeführt wird und dort an den Granulaten durch den Wasserabschlag anhaftende Wasser entfernt wird, und wobei das Compound in dem Bereich eine Temperatur von noch ca. 120 - 130 °C aufweist und am Ende der Trockeneinrichtung (7) ein Compound also ein Biokunststoffgranulat vorliegt, welches noch eine relative Feuchte von ca. 0,2 % +/- 0,1% aufweist.

4. Verfahren nach einem der vorherigen Ansprüche, **dadurch gekennzeichnet, dass** vor der Zuführung des Compoundiergranulats in dem Wendelhubförderer das Material einem Klassiersieb (8) zugeführt wird.

5. Verfahren nach einem der vorherigen Ansprüche, **dadurch gekennzeichnet, dass** der Extruder (3) in mehrere Zonen unterteilt ist.

6. Verfahren nach einem der vorherigen Ansprüche, **dadurch gekennzeichnet, dass** das bereitgestellte konventionelle Kunststoffgranulat ein Polypropylen (PP), Polyehtylen (PE), ABS, oder sonstiges bekanntes Kunststoffmaterial ist, welches bei der Zuführung in den Compodundierprozess vorzugsweise als Granulat oder Agglomerat oder dergleichen vorliegt.

## Claims

1. Method for producing a bioplastic granulate based on sunflower seed shells or sunflower seed hulls comprising the following steps:
- providing ground sunflower seed shells/sunflower seed hull material, wherein the grain size is in the range of 3 mm or less, preferably in the range of 0.01 to 1 mm, more preferably in the range of 0.1 to 0.3 mm;
- providing a plastic material;
- compounding the sunflower seed shell/sunflowerseed hull material with the plastic material, wherein the compounding is preferably carried out in an extruder (3), preferably a twin-screw extruder, and the compounded material is knocked off at the end of the extruder section with a tool with the addition of water, wherein the water has a temperature of preferably more than 50 °C, preferably about 80 - 90 °C, in order to cool the compounded material,
- wherein during compounding the compounding material is subjected to atmospheric degassing (4) and/or vacuum degassing (5),
the method being **characterized in that**
- the compounded material is fed to a cooling and drying device, namely a spiral lift conveyor (9), in which the residence time of the compounding granulate in the atmosphere is adjusted for a predetermined period of time and the compounding granulate is fed to the spiral lift conveyor at a temperature of more than 100 °C, preferably about 130 °C, and the plastic granulate leave the spiral lift conveyor at a temperature below 100 °C, preferably about 50 - 70 °C, and
- the shell material (1) is dried down a first contribution prior to compounding, namely during grinding in a mill, wherein a second drying being carried out during compounding, in particular during atmospheric and/or vacuum degassing in the extruder, and a third drying being carried out in the spiral lift conveyor (9), i.e. the cooling and drying device, so that the bioplastic granulate produced has a residual moisture of significantly less than 1 %, preferably less than 0.1 %, preferably of approx. 0.05 %.

2. Method according to claim 1, **characterized in that** the residence time of the granulate in the spiral lift conveyor is about 4 to 8 minutes, preferably 5 to 7 minutes.

3. Method according to one of the previous claims, **characterized in that** the compounded material, after leaving the extruder (3) and the water cut-off, is fed to a drying device (6), e.g. a centrifugal dryer (7), and there water adhering to the granulate by the water cut-off is removed, and wherein the compound in the region still has a temperature of approx. 120 - 130 °C and at the end of the drying device (7) a compound, i.e. bioplastic granulate, is present which still has a relative humidity of approx. 0.2 % +/- 0.1 %.

4. Method according to one of the previous claims, **characterized in that** before the compounding granulate is fed in the spiral lift conveyor, the material is fed to a classifying screen (8).

5. Method according to any of the previous claims, **characterized in that** the extruder (3) is divided into several zones.

6. Method according to any one of the preceding claims, **characterized in that** the conventional plastic granulate provided is a polypropylene (PP), polyehtylene (PE), ABS, or other known plastic material which, when fed into the compodunding process, is preferably in the form of granulate or agglomerates or the like.

## Revendications

1. Procédé pour produire un granulé en bioplastique à base de coques de graines de tournesol ou d'enveloppes de graines de tournesol comprenant les étapes suivantes :
- la fourniture de matériau broyé de coques de graines de tournesol/enveloppes de graines de tournesol, dans lequel la taille des grains se situe dans la plage de 3 mm ou moins, de préférence dans la plage de 0,01 à 1 mm, de préférence dans la plage de 0,1 à 0,3 mm ;
- la fourniture d'une matière plastique ;
- le compoundage du matériau de coques de graines de tournesol/enveloppes de graines de tournesol avec la matière plastique, dans lequel le compoundage s'effectue de préférence dans une extrudeuse (3), de préférence une extrudeuse bi-vis, et le matériau compoundé est coupé avec un outil par adjonction d'eau à la fin du parcours de l'extrudeuse, dans lequel l'eau présente une température de préférence supérieure à 50 °C, de préférence d'environ 80 - 90 °C, afin de refroidir le matériau de compound,
- dans lequel pendant le compoundage le matériau compoundé est soumis à un dégazage atmosphérique (4) et/ou à un dégazage par le vide (5), dans lequel le procédé est **caractérisé en ce que**
- le matériau compoundé est amené à un dispositif de refroidissement et de séchage, à savoir un transporteur-élévateur hélicoïdal (9), dans lequel le temps de séjour du granulé de compound dans l'atmosphère est réglé pour un laps de temps prédéfini et le granulé de compound est amené au transporteur-élévateur hélicoïdal à une température supérieure à 100 °C, de préférence d'environ 130 °C et le granulé plastique quitte le transporteur-élévateur hélicoïdal à une température inférieure à 100 °C, de préférence d'environ 50 - 70 °C, le transporteur-élévateur hélicoïdal et
- le matériau de coques (1) est séché avant le compoundage, à savoir pendant un broyage dans un broyeur pour atteindre une première valeur, dans lequel un deuxième séchage est réalisé pendant le compoundage principalement pendant le dégazage atmosphérique et/ou par le vide dans l'extrudeuse, et un troisième séchage s'effectue dans le transporteur-élévateur hélicoïdal (9), par conséquent le dispositif de refroidissement et de séchage, de sorte que le bioplastique produit présente une humidité résiduelle nettement inférieure à 1 %, de préférence inférieure à 0,1 %, de préférence d'environ 0,05 %.

2. Procédé selon la revendication 1,
**caractérisé en ce que** le temps de séjour du granulé dans le transporteur-élévateur hélicoïdal est d'environ 4 à 8 minutes, de préférence 5 à 7 minutes.

3. Procédé selon l'une quelconque des revendications précédentes, **caractérisé en ce que** le matériau compoundé après avoir quitté l'extrudeuse (3) et la coupe à l'eau est amené à un dispositif de séchage (6), par exemple un séchoir centrifuge (7) et l'eau adhérant aux granulés du fait de la coupe à l'eau y est éliminée, et dans lequel le compound présente dans la zone une température encore d'environ 120 - 130 °C et à la fin du dispositif de séchage (7) un compound par conséquent un granulé bioplastique est présent, lequel présente encore une humidité relative d'environ 0,2 % +/- 0,1 %.

4. Procédé selon l'une quelconque des revendications précédentes, **caractérisé en ce qu'**avant l'amenée du granulé de compoundage dans le transporteur-élévateur hélicoïdal le matériau est amené à un crible de classement (8).

5. Procédé selon l'une quelconque des revendications précédentes, **caractérisé en ce que** l'extrudeuse (3) est divisée en plusieurs zones.

6. Procédé selon l'une quelconque des revendications précédentes, **caractérisé en ce que** le granulé plastique conventionnel fourni est un polypropylène (PP), polyéthylène (PE), ABS, ou une autre matière plastique connue, laquelle est présente lors de l'amenée dans le processus de compoundage de préférence en tant que granulé ou aggloméré ou similaire.
